# EUROPÄISCHE PATENTSCHRIFT

(11) **EP 1 634 848 B1**
(45) Veröffentlichungstag und Bekanntmachung des Hinweises auf die Patenterteilung: **11.05.2011**
(21) Anmeldenummer: 05108104.0
(22) Anmeldetag: 05.09.2005
(51) Int. Cl.: B66D 1/28, F16L 1/028

(54) **Stützvorrichtung für eine Zugvorrichtung zum Verlegen von Rohrleitungen**
Support for traction device for laying pipelines
Support d'un dispositif de traction pour la pose de canalisations

(30) Priorität: 08.09.2004 DE 102004043481
(43) Veröffentlichungstag der Anmeldung: 15.03.2006
(73) Patentinhaber: TERRA AG fuer Tiefbautechnik, 4805 Brittnau (CH)
(72) Erfinder: Jenne, Dietmar, 4805 Brittnau (CH)
(74) Vertreter: Schaumburg, Thoenes, Thurn, Landskron, Eckert

(56) Entgegenhaltungen:
- DE-C1- 10 011 994
- DE-C1- 19 941 536
- NL-C2- 1 006 932
- US-A1- 2004 146 361

## Beschreibung

Die Erfindung betrifft eine Vorrichtung zum Verlegen von Rohrleitungen gemäß dem Oberbegriff des Anspruchs 1.

Aus der DE 10011994 C1 ist eine Seilzugvorrichtung bekannt, die dazu dient, einen Berstkopf durch eine alte zu erneuernde Leitung zu ziehen, diese zu zertrümmern und die Trümmer in das umliegende Erdreich zu drücken und das neue zu verlegende Rohr gleichzeitig miteinzuziehen. Die Seilzugvorrichtung ist in einer Arbeitsgrube angeordnet und mittels einzelner Stützen an dem Grubenboden sowie der Front- und Rückwand der Grube abgestützt.

Die bekannte Lösung hat den Nachteil, dass die einzelnen Stützen sorgfältig positioniert und eingestellt werden, um einen sicheren Stand der Seilzugvorrichtung in der Grube zu gewährleisten. Die Anordnung ist so getroffen, dass die Seilzugvorrichtung das Herausziehen der Rohrverlegewerkzeuge oder auch der Abschnitte einer zu erneuernden Leitung aus dem Erdreich behindert. Um dies zu vermeiden, müsste die Arbeitsgrube entsprechend größer gemacht werden, wodurch sich auch die Länge der Stützen zum Abstützen der Seilzugvorrichtung vergrößert. Dies wiederum verringert die Standsicherheit der Seilzugvorrichtung im Arbeitszustand.

Die US 2004/0146361 A1 beschreibt eine Seilzugvorrichtung mit einer die Seilzugvorrichtung tragenden Stütz- oder Frontplatte und einer Fußplatte. Die Seilzugvorrichtung kann in eine Arbeitsgrube abgesenkt werden. Die Frontplatte, die zur Anlage an einer Wand der Arbeitsgrube bestimmt ist, hat eine Durchtrittsöffnung für das zu ziehende Seil.

Die NL-C2-1006932 beschreibt eine Seilzugvorrichtung mit einem in eine Arbeitsgrube absenkbaren Stützrahmen, an dessen oberem Ende eine Seilwinde angeordnet ist und dessen unteres Ende mit einer Frontplatte an einer Wand der Arbeitsgrube anliegt. Hinter der Frontplatte ist eine Umlenkrolle für das zu ziehende Seil gelagert. Die Frontplatte hat eine Durchtrittsöffnung für das Seil.

Der Erfindung liegt die Aufgabe zugrunde, eine Vorrichtung der eingangs genannten Art anzugeben, bei der die Zugvorrichtung sicher und zuverlässig abgestützt werden kann, ohne dass dadurch das Einziehen der Arbeitswerkzeuge oder von Teilen der zu erneuernden Leitung in die Arbeitsgrube behindert wird.

Diese Aufgabe wird erfindungsgemäß durch die im kennzeichnenden Teil des Anspruchs 1 angegebenen Merkmale gelöst.

Der Rahmen gewährleistet durch seine Anlage mit der Frontplatte an der Frontseite der Arbeitsgrube eine sichere Abstützung der Zugvorrichtung, ohne das die Gefahr besteht, dass diese durch die Reaktionskräfte beim Ziehen kippt oder sich die Einzelstützen ins Erdreich bohren. Gleichzeitig wird durch den Rahmen der Stützvorrichtung ein Raum freigehalten, in den die Arbeitswerkzeuge und/oder Teile des alten Leitungsrohres nach dem Austritt aus dem Erdreich gezogen werden können, so dass sie von dem Zugmittel gelöst und aus der Arbeitsgrube entfernt werden können.

Zweckmäßigerweise ist an dem der Fußplatte fernen Ende des Rahmens eine Umlenkrolle für das Zugmittel gelagert. Um die Umlenkrolle zu schützen und ein Abgleiten des Zugmittels, insbesondere eine Seiles von der Umlenkrolle zu vermeiden, ist die Umlenkrolle zweckmäßigerweise zwischen zwei zueinander parallelen Aufnahmewangen gelagert.

Soll ein altes zu erneuerndes Leitungsrohr in an sich bekannter Weise in dem Erdreich zertrümmert werden, wobei die Trümmer im Erdreich verbleiben, so muss verhindert werden, dass das alte Leitungsrohr durch den Berstkopf oder das Splittwerkzeug teilweise aus dem Erdreich geschoben wird. Zu diesem Zweck ist die Durchtrittsöffnung in der Frontplatte durch eine leicht lösbar angebrachte Blockierplatte auf eine dem Durchtrittsquerschnitt des Zugmittels entsprechende Öffnungsweite einschränkbar. In diesem Falle stützt sich die alte Leitung mit ihrem Ende an der Blockierplatte ab, während das Zugmittel durch die verbleibende Durchtrittsöffnung hindurchtritt. Erst wenn der Berstkopf an der Blockierplatte ansteht, wird diese entfernt, so dass der Berstkopf in den Rahmen der Stützvorrichtung eingezogen werden kann.

Bei einer anderen Ausführungsform der Erfindung ist in dem Rahmen im Weg des Zugmittels eine Aufnahme für ein stationäres Rohrsplittwerkzeug angeordnet, das eine zum Durchtritt des Zugmittels bestimmte Öffnung hat. Diese Lösung ist mit Vorteil dort einsetzbar, wo beim Verlegen neuer Leitungen die alten nicht im Boden verbleiben sollen, wie dies beispielsweise bei Bleirohren der Fall ist. Aus Umweltgründen wird hier versucht, die Bleirohre nicht im Erdreich zu belassen, da das Material giftig ist. In diesem Falle wird das Altrohr durch eine entsprechende Verbindung mit dem Zugmittel aus dem Erdreich gezogen oder meist geschoben, wobei es an dem stationären Rohrsplittwerkzeug zerteilt wird, so dass die so entstehenden Teilstränge des alten Rohres von dem Zugmittel getrennt und aus der Arbeitsgrube heraus gezogen werden können. Dieser Vorgang kann noch dadurch erleichtert und unterstützt werden, dass in dem Rahmen beiderseits der Aufnahme für das stationäre Splittwerkzeug Leitflächen zum Umlenken der durch das Splittwerkzeug erzeugten Teilstränge eines aus dem Erdreich gezogenen Leitungsrohres angeordnet sind. Auf diese Weise kann der gesamte jeweilige Abschnitt des zu erneuernden Leitungsrohres kontinuierlich aus dem Erdreich herausgezogen oder geschoben und dabei gleichzeitig zerteilt und aus der Arbeitsgrube herausgeleitet werden.

Um die Stützvorrichtung an unterschiedliche Tiefen der Arbeitsgrube anpassen zu können, ist es zweckmäßig, wenn der Rahmen aus mehreren aufeinander setzbaren Teilrahmen besteht. Dies bietet auch die Möglichkeit, die Zugvorrichtung ggf. aus der Arbeitsgrube herauszuheben, so dass sie leichter bedient werden kann.

Das Zugmittel kann je nach Wunsch eine Kette oder auch ein Seil sein. Zum Ziehen eines Seiles umfasst die Zugvorrichtung bei einer bevorzugten Ausführungsform eine passive erste Klemmvorrichtung, die durch das sich in Zugrichtung bzw. entgegen derselben bewegende Seil in eine Freigabestellung bzw. eine Klemmstellung verstellt wird, sowie eine aktive zweite Klemmvorrichtung, die durch eine Stellvorrichtung zwischen einer Klemmstellung und einer Freigabestellung verstellbar und parallel zur Zugrichtung linear verstellbar ist. Mit der aktiven Klemmvorrichtung wird das Zugseil mittels der Stellvorrichtung geklemmt und um eine vorbestimmte Strecke gezogen. Beim Rückhub übernimmt die passive Klemmvorrichtung das Halten des Seiles um ein Zurückrutschen desselben zu verhindern. Es sind jedoch auch andere Zugvorrichtungen, beispielsweise Winden, denkbar.

Die folgende Beschreibung erläutert in Verbindung mit den beigefügten Zeichnungen die Erfindung anhand eines Ausführungsbeispieles. Es zeigen:
- Fig. 1: eine perspektivische Seitenansicht der erfindungsgemäßen, als Unterbau für eine darauf montierte Seilzugvorrichtung ausgebildeten Stützvorrichtung,
- Fig. 2: eine vergrößerte perspektivische Darstellung der Stützvorrichtung allein mit Blick auf die Frontplatte,
- Fig. 3: eine perspektivische Darstellung des Rahmens der Stützvorrichtung allein,
- Fig.4: eine perspektivische Darstellung einer mehrteiligen Stützvorrichtung mit darauf montierter Seilzugvorrichtung und
- Fig. 5: eine weitere Ausführungsform der Erfindung, bei welcher die Stützvorrichtung an der Vorderseite der Seilzugvorrichtung montiert ist.

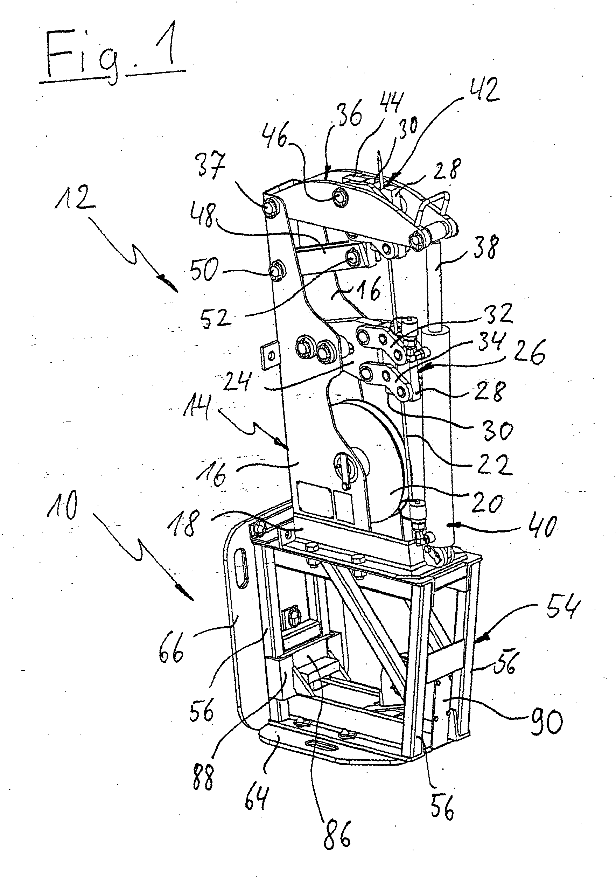

In der Figur 1 erkennt man eine allgemein mit 10 bezeichnete Stützvorrichtung, auf der eine mit 12 bezeichnete Seilzugvorrichtung montiert ist. Die Vorrichtung 10, 12 ist dazu bestimmt, in einer Arbeitsgrube eingesetzt zu werden, in welche ein zu erneuerndes altes Leitungsrohr oder eine Erdbohrung mündet, wie dies beispielsweise in der eingangs zitierten DE 10011994 C1 dargestellt ist.

Die Seilzugvorrichtung 12 umfasst einen Rahmen 14 mit zwei nach Art eines C-Profils miteinander verbundenen zueinander parallelen Rahmenplatten 16 und einem Rahmenfuß 18. In einem unteren Bereich der Seilzugvorrichtung ist zwischen den Rahmenplatten 16 eine Umlenkrolle 20 gelagert, über die ein Zugseil 22 geführt werden kann, die aber bei dem in Figur 1 abgebildeten Ausführungsbeispiel nicht benötigt wird.

In einem mittleren Bereich des Rahmens 14 ist zwischen den Rahmenplatten 16 eine Halteplatte 24 befestigt, die zur Halterung einer allgemein mit 26 bezeichneten passiven ersten Klemmvorrichtung dient. Diese besteht aus zwei zueinander parallelen Klemmbacken 28 und 30, zwischen denen das Zugseil 22 verläuft und die jeweils über ein Hebelpaar 32, 34 sowohl untereinander als auch mit der Halteplatte 24 gelenkig verbunden sind. Die Anlenkpunkte der Hebel 32, 34 an den Klemmbacken 28 bzw. 30 sind so gewählt, dass die Klemmbacke 28 bei einer Aufwärtsbewegung des Zugseiles in Richtung des Pfeiles A nach oben mitgenommen wird und sich dabei von der Klemmbacke 30 entfernt, so dass das Zugseil 22 ohne Behinderung zwischen den Klemmbacken 28 und 30 in Richtung des Pfeiles A hindurchgleiten kann. Wird bei einer Bewegung des Zugseiles 22 entgegen der Richtung des Pfeiles A die Klemmbacke 28 dagegen nach unten relativ zur Klemmbacke 30 verschoben, so nähert sie sich an die Klemmbacke 30 an und klemmt dadurch zwangsläufig das Zugseil zwischen den Backen 28 und 30 ein. Die Überführung der Klemmvorrichtung 26 in ihre Klemmstellung bzw. Freigabestellung erfolgt also allein durch die Bewegung des Zugseiles 22 selbst. Die erste Klemmvorrichtung ist somit selbsthemmend.

Am oberen Ende des Rahmens 14 ist ein Schwenkarm 36 um eine Achse 37 schwenkbar angelenkt, an dessen freiem Ende eine Kolbenstange 38 eines Hydraulikzylinders 40 angreift, der sich mit seinem anderen Ende am Rahmenfuß 18 abstützt. Zwischen den beiden Schenkeln des Hebelarmes 36 ist eine aktive zweite Klemmvorrichtung 42 angeordnet, die grundsätzlich genauso aufgebaut ist wie die Klemmvorrichtung 26, wobei jedoch eine der Halteplatte 24 entsprechende Halteplatte 44, an der die Klemmbacken 28, 30 über die Hebelpaare 32, 34 gehalten sind, ihrerseits an dem Schwenkarm 36 um eine Achse 46 schwenkbar gelagert ist. Mit ihrem anderen Ende ist die Halteplatte 44 über einen Doppellenker 48 mit den Rahmenplatten 16 um die Achsen 50, 52 gelenkig verbunden. Die Anordnung ist so getroffen, dass beim Ausfahren der Kolbenstange 38 und dem Anheben des Schwenkarmes 36 das Zugseil 22 automatisch zwischen den Klemmbacken 28, 30 der Klemmvorrichtung 42 geklemmt und dabei in Richtung des Pfeiles A mitgenommen wird. Wird die Kolbenstange 38 wieder eingefahren, d.h. der Schwenkarm 36 entgegen der Richtung des Pfeiles A abgesenkt, so werden die Klemmbacken 28, 30 der Klemmvorrichtung 42 gelöst, wobei gleichzeitig die erste Klemmvorrichtung 26 das Zugseil 22 klemmt und in seiner Stellung festhält. Diese Art von Seilzugvorrichtung ist an sich bekannt.

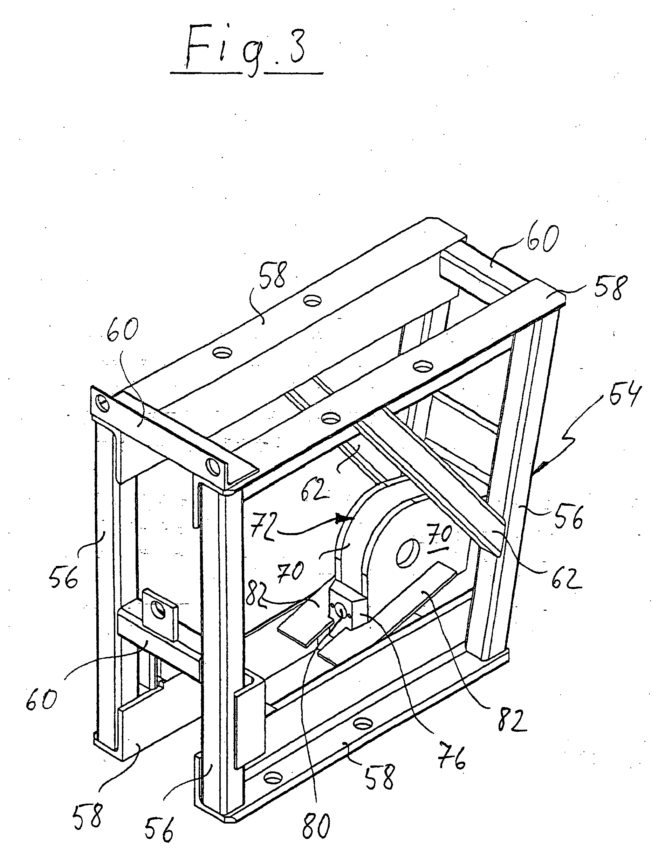

Die Stützvorrichtung 10 umfasst einen Rahmen 54, der in Figur 3 deutlicher dargestellt ist. Er besteht aus aufrechten Streben 56, die an ihren oberen und unteren Enden jeweils paarweise durch zueinander parallele Winkelprofile 58 miteinander verbunden sind. Die so gebildeten rechteckigen Teilrahmen sind durch Querstreben bzw. Querprofile 60 miteinander verbunden, wie dies in Figur 3 dargestellt ist. Die Steifigkeit des Rahmens 54 wird durch Winkelstreben 62 gemäß der Darstellung in Figur 3 erhöht.

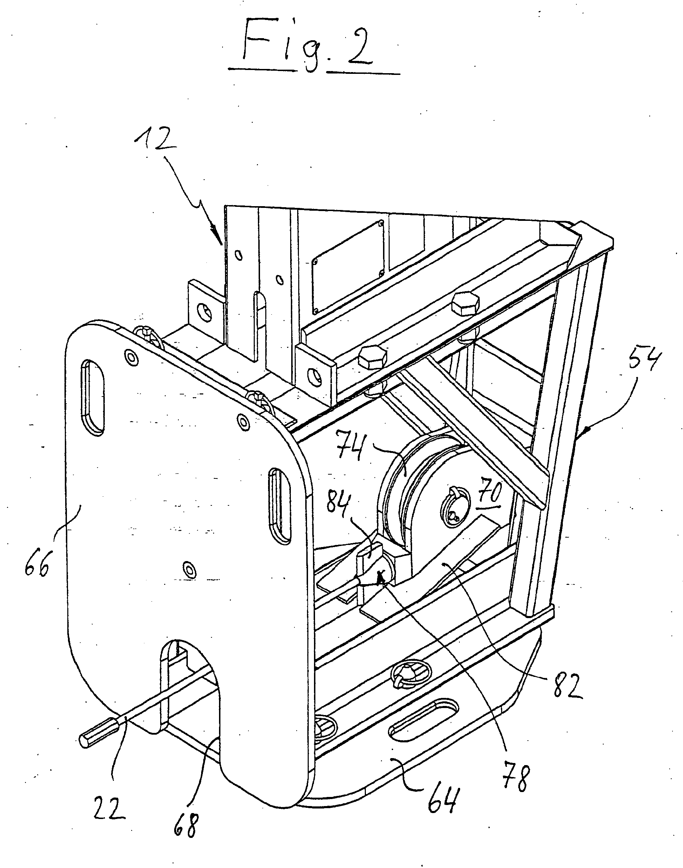

Der Rahmen 54 steht auf einer Fußplatte 64 (Figuren 1 und 2), die mit den Winkelprofilschienen 58 verschraubt ist. Ferner ist an der Frontseite des Rahmens 54 eine Frontplatte 66 befestigt, die senkrecht zur Fußplatte 64 gerichtet ist und zur Anlage an der Frontwand einer Arbeitsgrube bestimmt ist. In einem mittleren unteren Bereich der Frontplatte hat diese eine Aussparung oder Durchtrittsöffnung 68, die zum unteren Rand der Frontplatte 66 hin offen ist.

Im rückwärtigen unteren Bereich des Rahmens 54 befindet sich eine von zwei zueinander parallelen Wangen 70 gebildete Aufnahme 72, in der eine Umlenkrolle 74 für das Zugseil 22 gelagert ist. Am vorderen Ende der Aufnahme 72 ist eine Halterung 76 für ein Splittwerkzeug 78 angeordnet mit einer Durchtrittsöffnung 80 für das über die Umlenkrolle 74 laufende Zugseil 22. Beiderseits der Aufnahme 72 für die Umlenkrolle 74 sind zwei Leitflächen 82 so angeordnet und geformt, dass sie die Hälften eines in den Rahmen 54 hineingezogenen Altrohres, das von dem Messer 84 des Splittwerkzeuges 78 zerteilt wird, beiderseits der Aufnahme 72 nach oben ablenken, so dass die so erzeugten Hälften des Altrohres kontinuierlich nach oben abgezogen und dabei gleichzeitig von dem Zugseil 22 getrennt werden können.

Die Öffnung 68 in der Frontplatte 66 ermöglicht nicht nur das eben beschriebene Eintreten eines Altrohres in den Rahmen 54, sondern auch den Durchtritt eines Aufweitkopfes oder Berstkopfes, der durch eine Erdbohrung oder ein zu zertrümmerndes Altrohr hindurchgezogen wurde. Soll ein Altrohr in dem Boden verbleiben und lediglich zertrümmert werden, so muss man verhindern, dass das Altrohr beim Durchziehen des Berstkopfes teilweise in die Arbeitsgrube hineingeschoben wird. Hierzu ist eine in der Figur 1 dargestellte Blockierplatte 86 vorgesehen, die in eine Halterung 88 hinter der Öffnung 68 der Frontplatte 66 einschiebbar ist und die Durchtrittsöffnung 68 auf einen Durchmesserbereich beschränkt, der das Zugseil 22 gerade noch hindurchtreten lässt. An dieser Blockierplatte kann sich das der Arbeitsgruppe zugewandte Ende des Altrohres abstützen, so dass ein Austreten des Altrohres in die Arbeitsgrube verhindert wird. Soll später das Arbeitswerkzeug in den Rahmen 54 der Stützvorrichtung 10 hineingezogen werden, so wird die Blockierplatte 86 entfernt, so dass die lichte Weite der Durchtrittsöffnung 68 vollständig zur Verfügung steht.

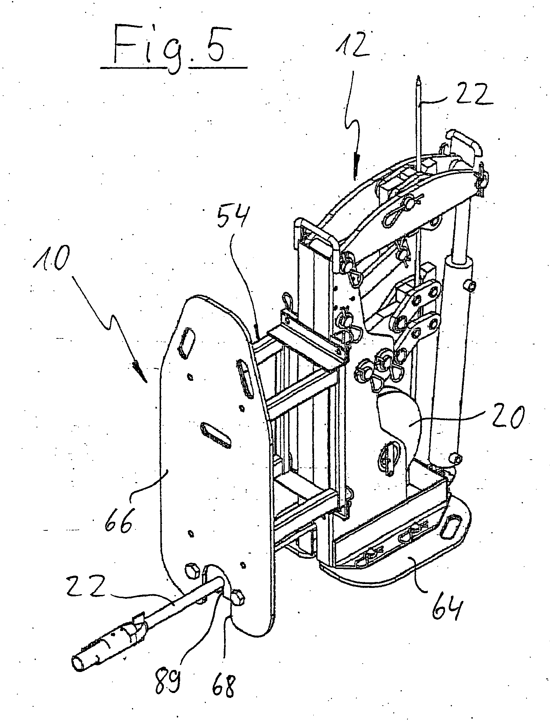

Die in der Blockierplatte vorgesehene Durchtrittsöffnung 89 (Fig. 5) für das Zugseil ist ebenso wie die Öffnung 68 zu einem Rand der Platte hin offen, so dass die Blockierplatte leicht auf das Zugseil aufgesetzt bzw. von ihm abgezogen werden kann.

An der Rückseite des Rahmens 54 ist eine die Aufnahme 72 abdeckende Schutzplatte 90 angeordnet, die verhindert, dass im Falle eines Seilrisses das Zugseil 22 nach hinten aus dem Rahmen 54 austreten kann.

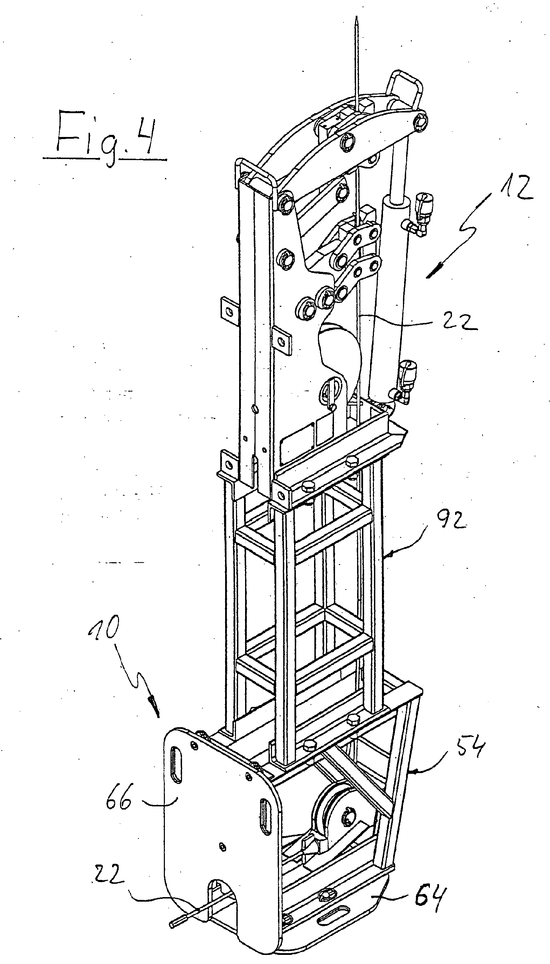

Figur 4 zeigt eine Ausführungsform, bei welcher der Rahmen 54 der Stützvorrichtung 10 durch einen Teilrahmen 92 nach oben hin verlängert ist. In diesem Falle kann die Seilzugvorrichtung 12 nicht nur in einer Arbeitsgrube, sondern auch in einem bereits vorhandenen Schacht einer Kanalisation eingesetzt werden, wobei die eigentliche Seilzugvorrichtung durch die Verlängerung des Rahmens 54 nicht mehr im Schacht, sondern oberhalb des Schachtes steht und dadurch leicht zugänglich wird. Im übrigen sind die Stützvorrichtung 10 und die Seilzugvorrichtung 12 in der gleichen Weise ausgebildet wie bei der Ausführungsform gemäß den Figuren 1 bis 3.

Figur 5 schließlich zeigt eine Ausführungsform, bei welcher die Fußplatte 64 an dem Rahmenfuß 18 der Seilzugvorrichtung 12 befestigt ist, während der Rahmen 54 mit der Frontplatte 66 an der Vorderseite der Seilzugvorrichtung 12 befestigt ist. In diesem Falle steht die Seilzugvorrichtung also direkt auf dem Grubenboden und stützt sich wie bei der vorherigen Ausführungsform über die Frontplatte 66 direkt an der Frontwand der Arbeitsgrube ab. Das Zugseil verläuft in diesem Falle über die im Rahmen 14 der Zugvorrichtung 12 gelagerte Umlenkrolle 20. Im übrigen ist die Arbeitsweise der beschriebenen Vorrichtung die gleiche wie bei der Ausführungsform gemäß den Figuren 1 bis 3.

## Patentansprüche

1. Vorrichtung zum Verlegen von Rohrleitungen mit einer Seilzugvorrichtung (12) zum Ziehen eines neu zu verlegenden Leitungsrohres, eines alten zu erneuernden Leitungsrohres, eines Rohrberst- oder Splittwerkzeuges und/oder eines Aufweitkopfes mittels eines flexiblen Zugmittels (22) sowie eine mit der Zugvorrichtung verbindbare Stützvorrichtung (10) zur Abstützung der Zugvorrichtung (12) in einer Arbeitsgrube, in die eine Erdbohrung oder ein in der Erde verlegtes Leitungsrohr mündet, **dadurch gekennzeichnet, dass** die Stützvorrichtung (10) einen als Unterbau für die Zugvorrichtung (12) ausgebildeten annähernd quaderförmigen Rahmen (54) umfasst, der starr mit der Zugvorrichtung (12) verbindbar ist, einen freien Raum begrenzt sowie eine zur Auflage auf dem Grubenboden bestimmte Fußplatte (64) und eine Frontplatte (66) hat, die zur Anlage an der Frontseite der Arbeitsgrube bestimmt ist und eine Durchtrittsöffnung (68) für das Zugmittel (22), den Aufweitkopf, das Rohrberstwerkzeug und/oder ein Leitungsrohr hat.

2. Vorrichtung nach Anspruch 1, **dadurch gekennzeichnet, dass** an dem der Fußplatte (64) fernen Ende des Rahmens (54) eine Umlenkrolle (74) für das Zugmittel (22) gelagert ist.

3. Vorrichtung nach Anspruch 2, **dadurch gekennzeichnet, dass** die Umlenkrolle (74) zwischen zwei zueinander parallelen Aufnahmewangen (70) gelagert ist.

4. Vorrichtung nach einem der Ansprüche 1 bis 3, **dadurch gekennzeichnet, dass** die Durchtrittsöffnung (68) in der Frontplatte (66) durch eine leicht lösbar angebrachte Blockierplatte (86) auf eine dem Durchtrittsquerschnitt des Zugmittels (22) entsprechende Öffnungsweite einschränkbar ist.

5. Vorrichtung nach einem der Ansprüche 1 bis 4, **dadurch gekennzeichnet, dass** in dem Rahmen (54) im Weg des Zugmittels (22) eine Aufnahme (76) für ein stationäres Rohrsplittwerkzeug (78) angeordnet ist, das eine zum Durchtritt des Zugmittels (22) bestimmte Öffnung hat.

6. Vorrichtung nach Anspruch 5, **dadurch gekennzeichnet, dass** in dem Rahmen (54) beiderseits der Aufnahme (72) für das stationäre Splittwerkzeug (78) Leitflächen (82) zum Umlenken der durch das Splittwerkzeug (78) erzeugten Teilstränge eines aus dem Erdreich gezogenen Leitungsrohres angeordnet sind.

7. Vorrichtung nach einem der Ansprüche 1 bis 6, **dadurch gekennzeichnet, dass** die Stützvorrichtung (10) eine Mehrzahl von aufeinander setzbaren Teilrahmen (54, 92) umfasst.

8. Vorrichtung nach einem der Ansprüche 1 bis 7, **dadurch gekennzeichnet, dass** das Zugmittel ein Seil (22) ist und dass die Zugvorrichtung eine passive erste Klemmvorrichtung (26) hat, die durch das sich in Zugrichtung (A) bzw. entgegen derselben bewegende Zugseil (22) in eine Freigabestellung bzw. eine Klemmstellung verstellbar ist, und eine aktive zweite Klemmvorrichtung hat, die durch eine Stellvorrichtung (40, 38) zwischen einer Klemmstellung und einer Freigabestellung verstellbar und parallel zur Zugrichtung (A) linear verstellbar ist.

9. Vorrichtung nach einem der Ansprüche 1 bis 8, **dadurch gekennzeichnet, dass** die Durchtrittsöffnung (68) in Form eines zum unteren Rand der Frontplatte (66) hin offenen Schlitzes in derselben ausgebildet ist.

## Claims

1. Apparatus for laying pipes, the apparatus having a cable pulling device (12) for pulling a conduit pipe to be newly installed, an old conduit pipe to be replaced, a pipe bursting tool or a splitting tool, and/or an expanding head by means of a flexible pulling means (22), as well as a support device (10) connected to the cable pulling device for supporting the cable pulling device (12) in a working pit into which an earth boring or a conduit pipe installed in the ground opens, **characterized in that** the support device (10) includes an approximately cubical frame (54) providing a base for the cable pulling device (12), which frame can be rigidly connected to the cable pulling device (12) and which frame defines a free space and has a base plate (64) to be placed on the pit floor and a front plate (66) which is intended to abut against the front wall of the working pit and provided with a through passage (68) for the pulling means (22), the expanding head, the pipe bursting tool, and/or the conduit pipe.

2. The apparatus according to claim 1, **characterized in that** a guide pulley (74) for the pulling means (22) is mounted at the end of the frame (54) distal from the base plate (64).

3. The apparatus according to claim 2, **characterized in that** the guide pulley (74) is mounted between two holding cheeks (70) which are aligned in parallel with each other.

4. The apparatus according to one of claims 1 to 3, **characterized in that** the through passage (68) in the front plate (66) can be reduced to an opening diameter corresponding to the passage cross section of the pulling means (22) by means of a readily releasable blocking plate (86).

5. The apparatus according to one of claims 1 to 4, **characterized in that** a receiving means (76) for a stationary pipe splitting tool (78) is provided in the frame (54) in the path of the pulling means (22), the pipe splitting tool having an opening for the pulling means (22) to pass through.

6. The apparatus according to claim 5, **characterized in that** in the frame (54) guiding surfaces (82) for diverting the partial strands of a conduit pipe pulled out of the ground are arranged on both sides of the receiving means (72) for the stationary splitting tool (78), which partial strands are produced by the splitting tool (78).

7. The apparatus according to one of claims 1 to 6, **characterized in that** the support apparatus (10) comprises a plurality of frame parts (54, 92) which can be stacked on top of each other.

8. The apparatus according to one of claims 1 to 7, **characterized in that** the pulling means is a cable (22) and **in that** the cable pulling device has a passive first clamping means (26), which can be adjusted into a release position or into a clamping position by means of the pulling cable (22) moving in the pulling direction (A) or in the opposite direction, respectively, as well as an active second clamping means, which can be adjusted into a clamping position or into a release position by means of an operating control (40, 38) and which is moveable linearly in parallel to the pulling direction (A).

9. The apparatus according to one of claims 1 to 8, **characterized in that** the through passage (68) is formed in the frontal plate (66) in the shape of a slit which opens towards the lower edge of the frontal plate.

## Revendications

1. Dispositif pour la pose de canalisations, comportant un dispositif de traction par câble (12), destiné à tirer un nouveau tube de canalisation à poser, un ancien tube à remplacer, un outil de rupture ou de découpe des tubes et/ou une tête d'élargissement à l'aide d'un moyen de traction (22) flexible, ainsi qu'un dispositif de support (10), pouvant être assemblé au dispositif de traction et destiné à supporter le dispositif de traction (12) dans une fosse de travail, dans laquelle débouche un sondage ou un tube de canalisation posé dans le sol, **caractérisé en ce que** le dispositif de support (10) comporte un cadre (54) sensiblement parallélépipédique, qui est réalisé en tant que soubassement pour le dispositif de traction (12) et qui peut être assemblé de manière rigide au dispositif de traction (12), délimite un espace libre et comporte une plaque inférieure (64), destinée à être posée sur le sol de la fosse, et une plaque frontale (66), qui est destinée à venir en appui contre la face frontale de la fosse de travail, et une ouverture de passage (68) pour le moyen de traction (22), la tête d'élargissement, l'outil de rupture des tubes et/ou un tube de canalisation.

2. Dispositif selon la revendication 1, **caractérisé en ce qu'**une poulie de renvoi (74) pour le moyen de traction (22) est montée au niveau de l'extrémité du cadre (54), éloignée de la plaque inférieure (64).

3. Dispositif selon la revendication 2, **caractérisé en ce que** la poulie de renvoi (74) est montée entre deux joues de réception (70) parallèles entre elles.

4. Dispositif selon l'une quelconque des revendications 1 à 3, **caractérisé en ce que** l'ouverture de passage (68) dans la plaque frontale (66) peut être limitée à une largeur d'ouverture correspondant à la section de passage du moyen de traction (22), par une plaque de blocage (86) montée de manière aisément amovible.

5. Dispositif selon l'une quelconque des revendications 1 à 4, **caractérisé en ce que** dans le cadre (54), dans la trajectoire du moyen de traction (22), est disposé un logement (76) pour un outil de découpe des tubes (78) stationnaire, qui comporte une ouverture destinée au passage du moyen de traction (22).

6. Dispositif selon la revendication 5, **caractérisé en ce que** dans le cadre (54), de part et d'autre du logement (72) pour l'outil de découpe des tubes (78) stationnaire, sont disposées des surfaces de guidage (82) pour le changement de direction des tronçons partiels, générés par l'outil de découpe (78), d'un tube tiré hors du sol.

7. Dispositif selon l'une quelconque des revendications 1 à 6, **caractérisé en ce que** le dispositif de support (10) comporte une pluralité de cadres partiels (54, 92) aptes à être posés les uns sur les autres.

8. Dispositif selon l'une quelconque des revendications 1 à 7, **caractérisé en ce que** le moyen de traction est un câble (22) et **en ce que** le dispositif de traction comporte un premier dispositif de serrage (26) passif, qui peut être réglé dans une position de déblocage ou une position de serrage par le câble de traction (22) déplacé dans le sens de traction (A) ou dans le sens opposé à celui-ci, et un deuxième dispositif de serrage actif qui, par un dispositif de réglage (40, 38), peut être déplacé entre une position de serrage et une position de déblocage et peut être déplacé linéairement parallèlement au sens de traction (A).

9. Dispositif selon l'une quelconque des revendications 1 à 8, **caractérisé en ce que** l'ouverture de passage (68) est réalisée dans la plaque frontale (66), sous la forme d'une fente ouverte vers le bord inférieur de cette dernière.
